(19) Europäisches Patentamt / European Patent Office / Office européen des brevets

(11) **EP 3 992 659 A1**

(12) **EUROPÄISCHE PATENTANMELDUNG**

(43) Veröffentlichungstag:
**04.05.2022 Patentblatt 2022/18**

(21) Anmeldenummer: **20204943.3**

(22) Anmeldetag: **30.10.2020**

(51) Internationale Patentklassifikation (IPC):
**G01S 5/22** *(2006.01)*    **G01S 1/40** *(2006.01)*

(52) Gemeinsame Patentklassifikation (CPC):
**G01S 5/22;** G01S 1/40; G01S 13/765

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Michel, Georg**
**09116 Chemnitz (DE)**

(54) **VERFAHREN ZUM BETRIEB EINES FUNKORTUNGSSYSTEMS, FUNKORTUNGSSYSTEM UND BASISSTATION**

(57)    In einem Funkortungssystem wird eine Position zumindest eines Transponders mittels mehrerer Basisstationen (101-103) des Funkortungssystems ermittelt, wobei die Basisstationen jeweils an einer vorgegebenen Position angeordnet sind. Zumindest zwei einen Abstand (d) zueinander aufweisende Transponder-Antennen (211-212) senden in vorgegebenen Zeitabständen abwechselnd Funksignale (300). Die Basisstationen ermitteln auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen. Die Position des zumindest einen Transponders wird anhand der Funksignal-Empfangszeitdifferenzen ermittelt.

FIG 2

EP 3 992 659 A1

**Beschreibung**

Die vorliegende Erfindung betrifft ein Verfahren zum Betrieb eines Funkortungssystems, insbesondere eines Real-time Locating System (RTLS), ein Funkortungssystem zur Durchführung des Verfahrens und eine Basisstation für ein Funkortungssystem.

Funkbasierte Ortungsvorrichtungen können beispielsweise auf RFID-Tags (radio-frequency identification) basieren, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

Aus DE 10 2009 008174 A1 ist ein Verfahren zur Ermittlung von Entfernung, Geschwindigkeit und Bewegungsrichtung eines RFID-Transponders bekannt, bei dem der RFID-Transponder auf übliche Weise mittels eines RFID-Lesegeräts abgefragt wird. Hierzu sendet das RFID-Lesegerät ein phasenweise moduliertes Versorgungsträgersignal aus. Ein Radarmodul sendet gleichzeitig ein Radarsignal aus, das vom RFID-Transponder empfangen und reflektiert wird. Das Versorgungsträgersignal und das Radarsignal weisen unterschiedliche Frequenzen auf. Das reflektierte Radarsignal wird wiederum vom Radarmodul empfangen. Aus dem reflektierten empfangenen Radarsignal wird eine Position des RFID-Transponders ermittelt. Das Radarsignal wird insbesondere dann ausgesendet, wenn auf das Versorgungsträgersignal keine Abfragedaten aufmoduliert werden.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst.

Aus der älteren europäischen Patentanmeldung mit dem Anmeldeaktenzeichen 20183193.0 ist ein Funkortungssystem bekannt, bei dem eine Position eines Transponders mittels mehrerer Basisstationen des Funkortungssystems anhand von Funksignal-Empfangszeitdifferenzen in einem ersten Betriebsmodus oder anhand von Funksignal-Laufzeiten in einem zweiten Betriebsmodus ermittelt wird. Zur Ermittlung seiner Position sendet der Transponder per Broadcast eine Nachricht an die Basisstationen. Die Nachricht empfangende Basisstationen ermitteln jeweils eine Empfangssignalstärke eines zur Übermittlung der Nachricht verwendeten Transpondersignals. Eine Auswertevorrichtung ermittelt eine Anzahl der Basisstationen, die das Transpondersignal mit einer über einer vorgegebenen Mindestsignalstärke liegenden Empfangssignalstärke empfangen haben und versetzt die Basisstationen dementsprechend in den ersten oder in den zweiten Betriebsmodus.

In auf Ultra-Breitband-Technik (UWB) basierenden Funkortungssystemen können insbesondere Angle of Arrival (AoA - Einfallsrichtung), Time Difference of Arrival (TDOA) und Two-way Ranging (TWR) als Verfahren zur Positionsbestimmung unabhängig voneinander verwendet werden. Diese Verfahren weisen unterschiedliche Anforderungen hinsichtlich verwendeter Hardware und räumlicher Anordnung der Hardware auf. TDOA ermöglicht eine Ortung einer Vielzahl von Transpondern gleichzeitig, erfordert hierfür jedoch zumindest 3 üblicherweise synchronisierte Basisstationen. Dagegen wird für TWR grundsätzlich nur eine Basisstation benötigt, um zumindest eine Distanz zu einem zu ortenden Transponder zu ermitteln. AoA erfordert zwar keine Synchronisierung der Basisstationen, jedoch eine genaue Ausrichtung der Basisstationen sowie mehrere Empfangsantennen pro Basisstationen. Nachteilig bei AoA ist eine mit zunehmender Entfernung abnehmende Genauigkeit.

In vielen Ländern ist es regulatorisch unzulässig, dass Basisstationen von Funkortungssystemen in Außenbereichen insbesondere zur Zeitsynchronisation UWB-Signale senden. Aus diesem Grund werden Basisstationen entweder über drahtgebundene Verbindungen oder mittels separater Funkübertragungstechnologien, beispielsweise im 2,4 GHz ISM-Band, synchronisiert.

Der vorliegenden Erfindung liegt daher die Aufgabe zugrunde, ein Verfahren zum Betrieb eines Funkortungssystems zu schaffen, das eine genaue Ortung einer Vielzahl von Transpondern ermöglicht und mit geringem Aufwand in Außenbereichen genutzt werden kann, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen, durch ein Funkortungssystem mit den in Anspruch 10 angegebenen Merkmalen und durch eine Basisstation mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Betrieb eines Funkortungssystems wird eine Position zumindest eines Transponders mittels mehrerer Basisstationen des Funkortungssystems ermittelt. Dabei sind die Basisstationen jeweils an einer vorgegebenen bzw. bekannten Position angeordnet. Vorzugsweise ist das Funkortungssystem ein zumindest RFID-basiertes, UWB-basiertes bzw. 2,4 GHz ISM-Band-basiertes Real-time Locating System.

Erfindungsgemäß senden zumindest zwei einen Abstand zueinander aufweisende Transponder-Antennen in vorgegebenen Zeitabständen abwechselnd Funksignale. Anhand der von den beiden Transponder-Antennen gesendeten Funksignale kann der Abstand zwischen den beiden Transponder-Antennen ermittelt werden, insbesondere entsprechend Two-way Ranging (TWR).

Die Basisstationen ermitteln erfindungsgemäß auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen. Anhand dieser Funksignal-Empfangszeitdifferenzen wird die Position des zumindest einen Transponders ermittelt, insbesondere entsprechend Time Difference of Arrival (TDOA). Dabei ist keine Synchronisierung der Basisstationen untereinander erforderlich, da sich mit den ermittelten Funksignal-Empfangszeitdifferenzen ein Gleichungssystem aufstellen lässt, anhand dessen die Positionen der beiden Transponder-Antennen berechnet werden können. Vorzugsweise senden somit nur die beiden Transponder-Antennen Funksignale, während die Basisstationen Funksignale lediglich empfangen.

Entsprechend einer ersten Ausführungsvariante der vorliegenden Erfindung ist eine erste Transponder-Antenne von einem ersten Transponder umfasst, während eine zweite Transponder-Antenne von einem zweiten Transponder umfasst ist. In diesem Fall sind die Zeitabstände, in denen die beiden Transponder-Antennen abwechselnd die Funksignale senden, durch Signallaufzeiten zwischen den beiden Transpondern sowie durch Signalverarbeitungszeiten innerhalb des jeweiligen Transponders vorgegeben. Insbesondere können die beiden Transponder untereinander eine Abstandsermittlung mittels Two-Way-Ranging durchführen und ermittelte Abstandswerte umfassende Funksignale senden. Vorteilhafterweise ermitteln die (unsynchronisierten) Basisstationen auf Basis während der Abstandsermittlung zwischen den Transpondern ausgetauschter Funksignale und anhand der ermittelten Abstandswerte jeweils die Funksignal-Empfangszeitdifferenzen.

Eine mögliche Anwendung der ersten Ausführungsvariante ist beispielsweise eine Ortung von Fahrzeugen mit UWB-Funkschlüsseln in einem Außenbereich. Sobald ein UWB-Funkschlüssel mit einem Fahrzeug kommuniziert und dabei Funksignale entsprechend Two-way Ranging (TWR) mit diesem austauscht, können diese Funksignale durch unsynchronisierte Basisstationen im Außenbereich erfasst und zur Ermittlung der Positionen des UWB-Funkschlüssels und des Fahrzeugs ausgewertet werden.

Entsprechend einer zweiten Ausführungsvariante der vorliegenden Erfindung sind die beiden Transponder-Antennen von demselben Transponder umfasst und weisen einen den Basisstationen bekannten bzw. bekannt gemachten Abstand zueinander auf. In diesem Fall senden die beiden Transponder-Antennen die Funksignale abwechselnd in den Basisstationen bekannten bzw. bekannt gemachten Zeitabständen. Anhand der von den beiden Transponder-Antennen gesendeten Funksignale und mittels der (unsynchronisierten) Basisstationen kann somit eine Position des Transponders und seine räumliche Ausrichtung ermittelt werden.

Das erfindungsgemäße Funkortungssystem ist zur Durchführung eines Verfahrens entsprechend vorangehenden Ausführungen vorgesehen und umfasst mehrere jeweils an einer vorgegebenen Position angeordnete Basisstationen zur Ermittlung einer Position zumindest eines Transponders sowie zumindest zwei einen Abstand zueinander aufweisende Transponder-Antennen. Die Transponder-Antennen sind dazu ausgestaltet und eingerichtet, in vorgegebenen Zeitabständen abwechselnd Funksignale zu senden. Erfindungsgemäß sind die Basisstationen dazu ausgestaltet und eingerichtet, auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen zu ermitteln, wobei die Position des zumindest einen Transponders anhand der Funksignal-Empfangszeitdifferenzen ermittelt wird.

Die erfindungsgemäße Basisstation für ein Funkortungssystem, ist dafür ausgestaltet und eingerichtet, zusammen mit weiteren Basisstationen eine Position eines Transponders zu ermitteln sowie von zumindest zwei einen Abstand zueinander aufweisende Transponder-Antennen in vorgegebenen Zeitabständen abwechselnd gesendete Funksignale zu empfangen. Außerdem ist die Basisstation dafür ausgestaltet und eingerichtet, auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen zu ermitteln, wobei die Position des zumindest einen Transponders anhand der Funksignal-Empfangszeitdifferenzen zu ermittelt wird.

Die vorliegende Erfindung wird nachfolgend an einem Ausführungsbeispiel anhand der Zeichnung näher erläutert. Es zeigt

Figur 1   Funkortungssystem mit mehreren Basisstationen für ein industrielles Automatisierungssystem,

Figur 2   eine schematische Darstellung eines Austauschs von Funksignalen innerhalb des Funkortungssystems gemäß Figur 1 zur Ortung von RTLS-Transpondern durch unsynchronisierte Basisstationen.

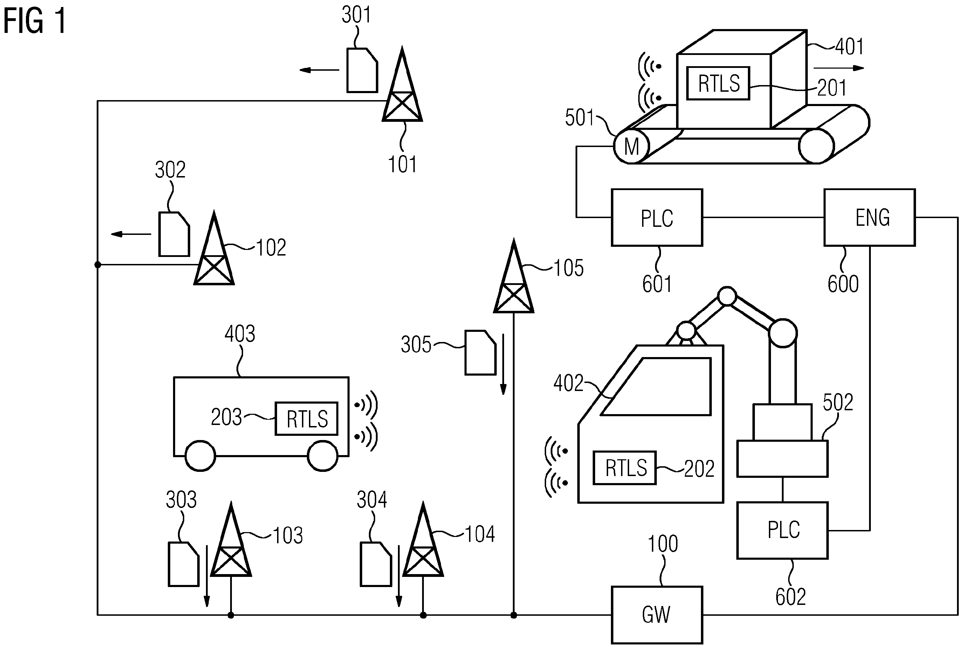

Das in Figur 1 dargestellte Funkortungssystem ist im vorliegenden Ausführungsbeispiel ein UWB- bzw. 2,4 GHz ISM-Band-basiertes Real-time Locating System (RTLS), das mehrere unsynchronisierte Basisstationen 101-105 umfasst, die jeweils an vorgegebenen bzw. bekannten Positionen angeordnet sind. Mittels der Basisstationen 101-105 werden anhand von Funksignallaufzeiten bzw. anhand von Funksignal-Empfangszeitdifferenzen Positionen von RTLS-Transpondern 201-203 erfasst, die an zu ortenden Gegenständen angebracht sind.

Mittels eines ersten RTLS-Transponders 201 wird beispielsweise ein Stückgut 401 auf einem Transportband überwacht, dessen Antrieb 501 durch eine erste speicherprogrammierbare Steuerung 601 gesteuert wird. Ein zweiter RTLS-Transponder 202 ist im vorliegenden Ausführungsbeispiel an einem Fahrzeugteil 402 befestigt, das in einer Fahrzeugfertigungslinie durch einen Roboter 502 transportiert und montiert wird. Der Roboter wird durch eine zweite speicherprogrammierbare Steuerung 602 gesteuert, die ebenso wie die erste speicherprogrammierbare Steuerung 601 mit einer zentralen Überwachungs- und Steuerungseinheit 600 verbunden ist. Durch die Überwachungs- und Steuerungseinheit 600 werden u.a. die speicherprogrammierbaren Steuerungen 601, 602 und das Funkortungssystem projektiert bzw. überwacht.

Das Funkortungssystem dient im vorliegenden Ausführungsbeispiel außerdem zur Überwachung der Position eines autonomen Fahrzeugs 403, mit denen Produktionsgüter zur Fahrzeugfertigungslinie transportiert werden. An dem autonomen Fahrzeug 403 ist zur Ortung ein dritter RTLS-Transponder 203 angeordnet. Neben UWB- bzw. 2,4 GHz ISM-Band-Komponenten kann das Funkortungssystem beispielsweise zusätzliche Komponenten zur GPS-, WLAN- oder Inertialsensorik-basierten Ortung umfassen. Dabei können mehrere oder alle dieser Komponenten in die RTLS-Transponder 201-203 und Basisstationen 101-105 des Funkortungssystems integriert sein.

Die Basisstationen 101-105 sind mit einer als Gateway 100 ausgestalteten Auswertevorrichtung des Funkortungssystems verbunden. Die RTLS-Transponder 201-203 übermitteln vorzugsweise jeweils einen dem jeweils zu ortenden Gegenstand zugeordneten Objektidentifikator an die Basisstationen 101-105. Auf dieser Basis senden die Basisstationen 101-105 Datagramme 301-305, die insbesondere erfasste Signallaufzeitinformationen, Signalempfangszeitinformationen, Informationen über Signalempfangszeitdifferenzen bzw. Signalstärkemesswerte von empfangenen Transpondersignalen bzw. Objektidentifikatoren umfassen, zur Auswertung an das Gateway 100.

Das Gateway 100 des Funkortungssystems übermittelt wiederum die erfassten Positionen der RTLS-Transponder 201-203 einschließlich der Objektidentifikatoren an die Überwachungs- und Steuerungseinheit 600. Dementsprechend ist das Überwachungs- und Steuerungseinheit 600 dafür konfiguriert, eine graphische Darstellung der übermittelten Positionen der RTLS-Transponder 201-203 aufzubereiten bzw. anhand der übermittelten Positionen der RTLS-Transponder 201-203 einschließlich der Objektidentifikatoren den RTLS-Transpondern 201-203 im Überwachungs- und Steuerungseinheit 600 jeweils zugeordnete Ortsinformationen zu validieren.

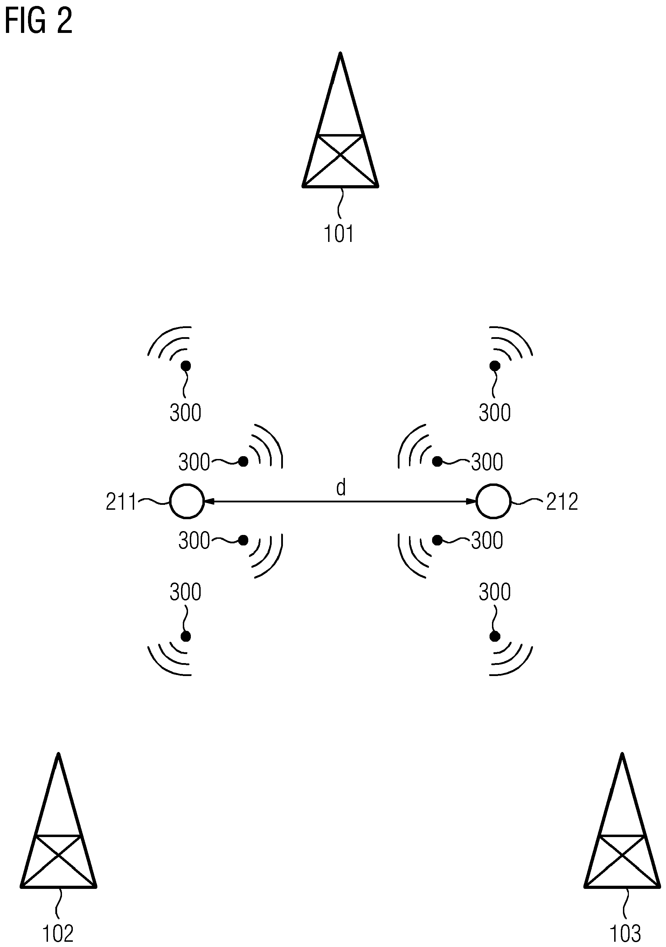

Entsprechend der Darstellung in Figur 2 senden zumindest zwei einen Abstand d zueinander aufweisende Transponder-Antennen 211-212 zur Ortung von RTLS-Transpondern durch unsynchronisierte Basisstationen 101-103 in vorgegebenen Zeitabständen abwechselnd Funksignale 300. Diese Funksignale 300 können insbesondere TWR-Funksignale sein, die zur Abstandsermittlung zwischen den beiden Antennen 211-212 ausgetauscht werden.

Bei einer ersten Ausführungsvariante sind die beiden Transponder-Antennen 211-212 unterschiedlichen RTLS-Transpondern zugeordnet. Eine mögliche Anwendung dieser Ausführungsvariante ist eine Ortung von Fahrzeugen mit UWB-Funkschlüsseln in einem Außenbereich. Dabei ist eine erste Transponder-Antenne 211 in den UWB-Funkschlüssel integriert, während eine zweite Transponder-Antenne 212 fahrzeugseitig angeordnet ist. Wenn der UWB-Funkschlüssel mit dem Fahrzeug kommuniziert und Funksignale 300 entsprechend Two-way Ranging (TWR) mit dem Fahrzeug austauscht, können die Funksignale 300 durch unsynchronisierte Basisstationen 101-103 im Außenbereich erfasst und zur Ermittlung der Positionen des UWB-Funkschlüssels und des Fahrzeugs ausgewertet werden.

Entsprechend einem anderen Anwendungsbeispiel für die erste Ausführungsvariante kann eine erste Transponder-Antenne 211 von dem RTLS-Transponder 203 umfasst sein, der an dem in Figur 1 dargestellten autonomen Fahrzeug 403 angeordnet ist, während eine zweite Transponder-Antenne 212 von dem an dem Fahrzeugteil 402 befestigten RTLS-Transponder 202 umfasst ist. Entsprechend nachstehenden Ausführungen kann sowohl die Position des autonomen Fahrzeugs 403 als auch die Position des Fahrzeugteils 402 gleichzeitig ermittelt werden.

Entsprechend der ersten Ausführungsvariante führen die den beiden Transponder-Antennen 211-212 zugeordneten RTLS-Transponder untereinander eine Abstandsermittlung mittels Two-Way-Ranging (TWR) durch und senden ermittelte Abstandswerte umfassende Funksignale 300, die durch die Basisstationen 101-103 erfasst werden können. Die Basisstationen 101-103 ermitteln auf Basis der während der Abstandsermittlung zwischen den RTLS-Transpondern ausgetauschten Funksignale 300 und anhand der ermittelten Abstandswerte jeweils Funksignal-Empfangszeitdifferenzen. Insbesondere sind die Zeitabstände, in denen die beiden Transponder-Antennen 211-212 abwechselnd die Funksignale 300 senden, durch Signallaufzeiten zwischen den beiden Transpondern sowie durch Signalverarbeitungszeiten innerhalb des jeweiligen RTLS-Transponders zur Durchführung von Two-way Ranging (TWR) vorgegeben.

Bei einer zweiten Ausführungsvariante sind die beiden Transponder-Antennen 211-212 von demselben RTLS-Transponder umfasst. In diesem Fall ist der Abstand d zwischen den beiden Transponder-Antennen 211-212 a priori bekannt, insbesondere den Basisstationen 101-103, und die beiden Transponder-Antennen 211-212 senden die Funksignale 300 abwechselnd in den Basisstationen 101-103 bekannten Zeitabständen. Entsprechend nachstehenden Ausführungen kann damit sowohl die Position des jeweiligen RTLS-Transponders als auch seine räumliche Ausrichtung gleichzeitig ermittelt werden.

Allgemein, also beiden Ausführungsvariante, ermitteln die Basisstationen 101-103 auf Basis der von den beiden Transponder-Antennen 211-212 gesendeten Funksignale 300 und anhand des Abstands d zwischen den beiden Transponder-Antennen 211-212 jeweils Funksignal-Empfangszeitdifferenzen zwischen den von den Transponder-Antennen 211-212 empfangenen Funksignalen 300. Die Position des bzw. der jeweiligen RTLS-Transponder wird dann anhand der durch die Basisstationen 101-103 jeweils ermittelten Funksignal-Empfangszeitdifferenzen berechnet. Insbesondere wird die Position des bzw. der jeweiligen RTLS-Transponder entsprechend Time Difference of Arrival (TDOA) ermittelt wird. Zur Ortung senden nur die beiden Transponder-Antennen 211-212 Funksignale, während die Basisstationen 101-103 die Funksignale 300 lediglich empfangen. Details zur Positionsermittlung mittels TDOA sind beispielsweise in Wikipedia unter Multilateration (https://en.wikipedia.org/wiki/ Multilateration) beschrieben.

Anhand der ermittelten Funksignal-Empfangszeitdifferenzen kann ein Gleichungssystem aufgestellt werden, mit dem die Positionen der beiden Transponder-Antennen 211-212 berechnet werden. Im Sinn einer vereinfachten Darstellung wird nachfolgend eine Berechnung zweidimensionaler Koordinationen $X_{T1}$, $Y_{T1}$ bzw. $X_{T2}$, $Y_{T2}$ der beiden Transponder-Antennen 211-212 beschrieben. Nachfolgende Ausführungen lassen sich in analoger Weise auf eine Berechnung dreidimensionaler Koordinaten erweitern.

Für den mittels Two-way Ranging (TWR) ermittelbaren Abstand d zwischen den beiden Transponder-Antennen 211-212 gilt folgende Gleichung:

$$d = \sqrt{(X_{T1} - X_{T2})^2 + (Y_{T1} - Y_{T2})^2}.$$

Ausgehend von bekannten zweidimensionalen Koordinaten $X_{B1}$, $Y_{B1}$, $X_{B2}$, $Y_{B2}$, $X_{B3}$, $Y_{B3}$ der in Figur 2 dargestellten Basisstationen 101-103 ergibt sich für die durch die Basisstationen 101-103 ermittelten Funksignal-Empfangszeitdifferenzen $\Delta_{Bi}$, i=1...3 folgendes nichtlineares Gleichungssystem, anhand dessen die Koordinationen $X_{T1}$, $Y_{T1}$, $X_{T2}$, $Y_{T2}$ der beiden Transponder-Antennen 211-212 berechnet werden können:

$$\Delta_{Bi} = (\sqrt{(X_{T1} - X_{Bi})^2 + (Y_{T1} - Y_{Bi})^2} - \sqrt{(X_{T2} - X_{Bi})^2 + (Y_{T2} - Y_{Bi})^2})/c, \quad i=1...3$$

Dabei ist c die Ausbreitungsgeschwindigkeit der von den Transponder-Antennen 211-212 gesendeten Funksignale 300. Die Funksignal-Empfangszeitdifferenzen $\Delta_{Bi}$ können durch die Basisstationen 101-103 insbesondere unter Berücksichtigung von Laufzeitverzögerungen entsprechend jeweiligem Abstand plus Antwortzeitverzögerungen, die sich bei einer Anwendung von Two-way Ranging (TWR) ergeben, ermittelt werden.

Das drei Gleichungen umfassende Gleichungssystem für die durch die Basisstationen 101-103 ermittelten Funksignal-Empfangszeitdifferenzen $\Delta_{Bi}$ und die Gleichung für den Abstand d zwischen den Transponder-Antennen bilden ein Gesamtgleichungssystem aus vier Gleichungen für die insgesamt vier Koordinaten $X_{T1}$, $Y_{T1}$, $X_{T2}$, $Y_{T2}$ der beiden Transponder-Antennen 211-212. Dieses Gesamtgleichungssystem kann beispielsweise mittels einer Näherungslösung durch Fehlerminimierung gelöst werden. Das Gesamtgleichungssystem kann auch analytisch gelöst in Analogie zu bei einer GPS-Ortung verwendeten Kleusberg- und Bancroft-Algorithmen.

**Patentansprüche**

1. Verfahren zum Betrieb eines Funkortungssystems, bei dem

- eine Position zumindest eines Transponders (201-203) mittels mehrerer Basisstationen (101-105) des Funkortungssystems ermittelt wird, wobei die Basisstationen jeweils an einer vorgegebenen Position angeordnet sind,

- zumindest zwei einen Abstand (d) zueinander aufweisende Transponder-Antennen (211-212) in vorgegebenen Zeitabständen abwechselnd Funksignale (300) senden,
- die Basisstationen auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen ermitteln,
- die Position des zumindest einen Transponders (201-203) anhand der Funksignal-Empfangszeitdifferenzen ermittelt wird.

2. Verfahren nach Anspruch 1,
bei dem anhand der von den beiden Transponder-Antennen (211-212) gesendeten Funksignale (300) der Abstand (d) zwischen den beiden Transponder-Antennen insbesondere entsprechend Two-way Ranging ermittelt wird.

3. Verfahren nach einem der Ansprüche 1 oder 2,
bei dem die Position des zumindest einen Transponders (201-203) entsprechend Time Difference of Arrival ermittelt wird.

4. Verfahren nach einem der Ansprüche 1 bis 3,
bei dem eine erste Transponder-Antenne von einem ersten Transponder umfasst ist, bei dem eine zweite Transponder-Antenne von einem zweiten Transponder umfasst ist und bei dem die Zeitabstände, in denen die beiden Transponder-Antennen abwechselnd die Funksignale senden, durch Signallaufzeiten zwischen den beiden Transpondern sowie durch Signalverarbeitungszeiten innerhalb des jeweiligen Transponders vorgegeben sind.

5. Verfahren nach Anspruch 4,
bei dem die beiden Transponder untereinander eine Abstandsermittlung mittels Two-Way-Ranging durchführen und ermittelte Abstandswerte umfassende Funksignale senden und bei dem auf Basis während der Abstandsermittlung zwischen den Transpondern ausgetauschter Funksignale und anhand der ermittelten Abstandswerte jeweils die Funksignal-Empfangszeitdifferenzen ermittelt werden.

6. Verfahren nach einem der Ansprüche 1 bis 3,
bei dem die beiden Transponder-Antennen von demselben Transponder umfasst sind sowie einen den Basisstationen bekannten Abstand zueinander aufweisen und bei dem die beiden Transponder-Antennen die Funksignale abwechselnd in den Basisstationen bekannten Zeitabständen senden.

7. Verfahren nach Anspruch 6,
bei dem anhand der von den beiden Transponder-Antennen gesendeten Funksignale eine Position des Transponders und seine räumliche Ausrichtung ermittelt werden.

8. Verfahren nach einem der Ansprüche 1 bis 7,
bei dem nur die beiden Transponder-Antennen Funksignale senden und die Basisstationen Funksignale lediglich empfangen.

9. Verfahren nach einem der Ansprüche 1 bis 8,
bei dem das Funkortungssystem ein zumindest RFID-basiertes, UWB-basiertes und/oder 2,4 GHz ISM-Band-basiertes Real-time Locating System ist.

10. Funkortungssystem zur Durchführung eines Verfahrens nach einem der Ansprüche 1 bis 9, wobei das Funkortungssystem

- mehrere jeweils an einer vorgegebenen Position angeordnete Basisstationen (101-105) zur Ermittlung einer Position zumindest eines Transponders (201-203) und
- zumindest zwei einen Abstand (d) zueinander aufweisende Transponder-Antennen (211-212) umfasst, die dazu ausgestaltet und eingerichtet sind, in vorgegebenen Zeitabständen abwechselnd Funksignale (300) zu senden,
- wobei die Basisstationen dazu ausgestaltet und eingerichtet sind, auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen zu ermitteln, wobei die Position des zumindest einen Transponders (201-203) anhand der Funksignal-Empfangszeitdifferenzen ermittelt wird.

11. Basisstation für ein Funkortungssystem, wobei die Basisstation dafür ausgestaltet und eingerichtet ist,

- zusammen mit weiteren Basisstationen eine Position eines Transponders zu ermitteln,
- von zumindest zwei einen Abstand (d) zueinander aufweisende Transponder-Antennen (211-212) in vorgegebenen Zeitabständen abwechselnd gesendete Funksignale (300) zu empfangen,
- auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen zu ermitteln, wobei die Position des zumindest einen Transponders (201-203) anhand der Funksignal-Empfangszeitdifferenzen ermittelt wird.

FIG 1

EP 3 992 659 A1

# FIG 2

Europäisches Patentamt
European Patent Office
Office européen des brevets

**EUROPÄISCHER RECHERCHENBERICHT**

Nummer der Anmeldung

EP 20 20 4943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2012/148721 A1 (MICROCHIP TECH INC [US]; NEMETH JOZSEF G [HU]) 1. November 2012 (2012-11-01) * Seite 6, Zeile 10 - Seite 27, Zeile 2 * * Abbildungen 1-13 * * Zusammenfassung * ----- | 1-11 | INV. G01S5/22 ADD. G01S1/40 |
| Y | Jafari Ahmadreza: "New TDOA based localization method for HDR systems", , 2. März 2015 (2015-03-02), Seiten 1-127, XP055794191, Gefunden im Internet: URL:https://tel.archives-ouvertes.fr/tel-01192940v2/document [gefunden am 2021-04-12] * Seite 48, Absatz 3 - Seite 80 * * Abbildungen 3.1- 3.31 * ----- | 1-11 | |
| A | WO 2008/027619 A2 (INTERMEC IP CORP [US]; MALTSEFF PAUL A [US]) 6. März 2008 (2008-03-06) * Seite 2, Absatz 10 - Seite 9, Absatz 35 * * Abbildungen 1-4 * * Zusammenfassung * ----- | 1-11 | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 12. April 2021 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 4943

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2021

| Im Recherchenbericht angeführtes Patentdokument | Datum der Veröffentlichung | Mitglied(er) der Patentfamilie | Datum der Veröffentlichung |
|---|---|---|---|
| WO 2012148721 A1 | 01-11-2012 | CN 103502836 A | 08-01-2014 |
| | | EP 2702425 A1 | 05-03-2014 |
| | | JP 6014122 B2 | 25-10-2016 |
| | | JP 2014516415 A | 10-07-2014 |
| | | KR 20140036204 A | 25-03-2014 |
| | | TW 201245747 A | 16-11-2012 |
| | | US 2012276921 A1 | 01-11-2012 |
| | | WO 2012148721 A1 | 01-11-2012 |
| WO 2008027619 A2 | 06-03-2008 | US 2010277318 A1 | 04-11-2010 |
| | | WO 2008027619 A2 | 06-03-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009008174 A1
- EP 3031039 A1
- EP 20183193